# EUROPEAN PATENT APPLICATION

(11) **EP 3 606 023 A1**
(43) Date of publication of application: **05.02.2020**
(21) Application number: 18772090.9
(22) Date of filing: 16.03.2018
(51) Int. Cl.: H04N 5/225

(54) **DUAL-CAMERA MODULE AND MOBILE TERMINAL**

(30) Priority: 20.03.2017 CN 201710164914
(71) Applicant: Vivo Mobile Communication Co., Ltd., Dongguan, Guangdong 523860 (CN)
(72) Inventor: GAO, Feng, Dongguan Guangdong 523860 (CN); CHENG, Chuanbo, Dongguan Guangdong 523860 (CN)
(74) Representative: Winter, Brandl, Fürniss, Hübner, Röss, Kaiser, Polte - Partnerschaft mbB
(86) International application number: PCT/CN2018/079318
(87) International publication number: WO 2018/171528

(57) **Abstract**

A dual-camera module and a mobile terminal are provided. The dual-camera module includes a first camera, a second camera and an installation bracket; the installation bracket includes a first lens mounting portion and a second lens mounting portion connected to the first lens mounting portion, wherein the first camera is fixedly mounted on the first lens mounting portion, the second camera is fixedly mounted on the second lens mounting portion.

## Description

### CROSS-REFERENCE TO RELATED APPLICATION

This application claims a priority to the Chinese patent application No. 201710164914.5 filed in China on March 20, 2017, a disclosure of which is incorporated herein by reference in its entirety.

### TECHNICAL FIELD

The present disclosure relates to the field of mobile terminal, and in particular, relates to a dual-camera module and a mobile terminal.

### BACKGROUND

In order to improve a camera effect in a better way, in addition to improving various indicators of a traditional single camera, a body of a related mobile terminal is equipped with dual cameras. In the related art, when the dual cameras are mounted on a mobile terminal, each camera usually needs to be equipped with a base on which the camera is mounted, and then the two bases mounted with the dual cameras are mounted on an installation bracket provided with an optical filter. However, strength of the cameras mounted on such separated bases is poor, and the body of the mobile terminal needs extra space for protecting a single camera module, which reduces use space of the mobile terminal and reduces flexibility of designing the body of the mobile terminal. In addition, the poor strength of the camera module also results in a reduced performance of the camera module and reduces a yield of the camera module. In addition, the camera module on the separated bases increases a production process of a manufacturer and reduces production efficiency.

### SUMMARY

The present disclosure provides a dual-camera module and a mobile terminal.

In a first aspect, the embodiments of the present disclosure provide a dual-camera module. The dual-camera module includes a first camera; a second camera; and an installation bracket including a first lens mounting portion and a second lens mounting portion connected to the first lens mounting portion, wherein, the first camera is fixedly mounted on the first lens mounting portion, the second camera is fixedly mounted on the second lens mounting portion.

In a second aspect, the embodiments of the present disclosure provide a mobile terminal, the mobile terminal includes the dual-camera module described above.

In this way, in the dual-camera module in the embodiments of the present disclosure, the first camera is directly fixedly mounted inside the first lens mounting portion included in the installation bracket, and the second camera is directly fixedly mounted inside the second lens mounting portion connected to the first lens mounting portion, so that the first camera and the second camera are directly integrated on the installation bracket. As compared to the related dual-camera module, it is no longer necessary to firstly mount the first camera and the second camera on bases, and then fix the base on the installation bracket, thereby reducing the number of parts in the dual-camera module and reducing the number of installation processes of the parts in the dual-camera module, thereby increasing structural strength of the dual-camera module and solving a problem that a related dual-camera module has a poor strength and occupies a large space due to separation between bases corresponding the dual cameras.

### BRIEF DESCRIPTION OF THE DRAWINGS

In order to more clearly illustrate technical solutions of the present disclosure, drawings to be used in description of the embodiments or the related art will be briefly described below. Obviously, the drawings in the following description are only some of the embodiments of the present disclosure, and those skilled in the art may obtain other drawings according to the drawings without any creative labor.
FIG. 1 is a structural schematic diagram of a structure of a dual-camera module of the present disclosure; and
FIG. 2 is a cross-sectional view of an installation bracket of the present disclosure.

### DETAILED DESCRIPTION

The technical solutions in the embodiments of the present disclosure will be clearly and completely described in the following in combination with the accompanying drawings in the embodiments of the present disclosure. It is obvious that the described embodiments are a part, rather than all, of the embodiments of the present disclosure. All other embodiments obtained by a person of ordinary skills in the art based on the embodiments of the present disclosure without paying creative labor fall within the scope of the present disclosure.

Directed to the problem that the related dual-camera module has a poor strength and occupies a large space due to separation between bases corresponding to the dual cameras. The present disclosure provides a dual-camera module and a mobile terminal.

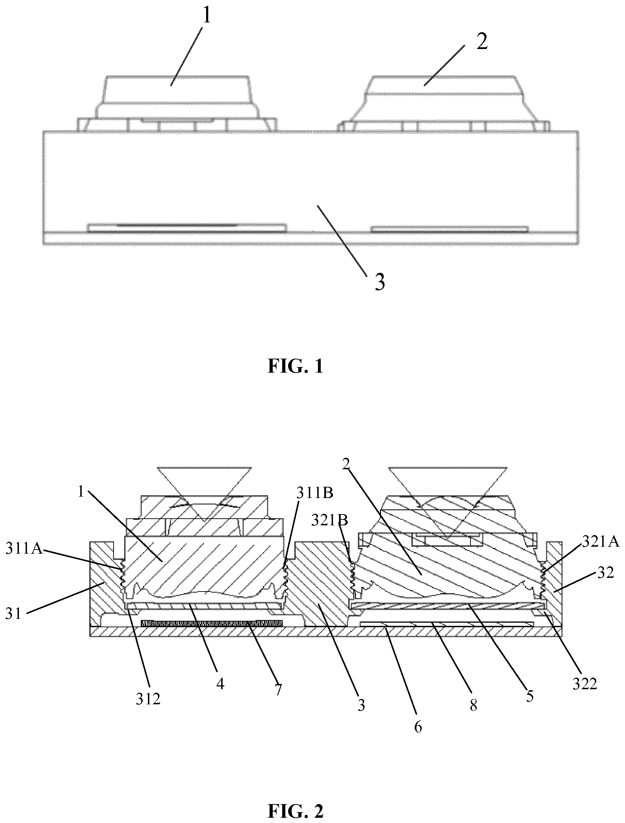

As shown in FIG. 1 and FIG. 2, the present disclosure provides a dual-camera module. The dual-camera module includes: a first camera 1, a second camera 2 and an installation bracket 3. The installation bracket 3 includes a first lens mounting portion 31 and a second lens mounting portion 32 connected to the first lens mounting portion 31. The first camera 1 is fixedly mounted on the first lens mounting portion 31, and the second camera 2 is fixedly mounted on the second lens mounting portion 32.

Thus, in the dual-camera module, the first camera 1 is directly fixedly mounted on the first lens mounting portion 31 included in the installation bracket 3, and the second camera 2 is directly fixedly mounted on the second lens mounting portion 32 included in the installation bracket 3, and the first lens mounting portion 31 and the second lens mounting portion 32 are connected. In this way, the first camera 1 and the second camera 2 are directly integrated on the installation bracket 3. Compared with the related dual-camera module, it is no longer necessary to firstly mount the first camera and the second camera on the bases, and then fix the bases on the installation bracket, thereby reducing processes of parts production and installation of a camera module and increasing productivity and yield. In addition, since the first lens mounting portion 31 and the second lens mounting portion 32 on the installation bracket 3 are connected, a structural strength of the installation bracket is increased. Since the number of parts in the dual-camera module is reduced, and the number of mounting processes of the parts is reduced, thereby increasing an overall structural strength of the dual-camera module, reducing use space of the dual-camera module, and solving a problem that the related dual-camera module has the poor strength and occupies the large space due to separation between bases corresponding the dual cameras.

Further, continuing reference to FIG. 2, both the first lens mounting portion 31 and the second lens mounting portion 32 are hollow structures, and an outer sidewall of the first lens mounting portion 31 is integrally formed with an outer sidewall of the second lens mounting portion 32.

Thus, integral formation of the outer sidewall of the first lens mounting portion 31 with the outer sidewall of the second lens mounting portion 32, increases a connection strength between the first lens mounting portion 31 and the second lens mounting portion 32, thereby increasing an overall structural strength of the dual camera module. In addition, a construction of the integral formation also saves an overall use space of the dual-camera module. In addition, both the first lens mounting portion 31 and the second lens mounting portion 32 are set as the hollow structures, which facilitates mounting of the first camera 1 and the second camera 2.

Specifically, in order to facilitate use of the first camera 1 and the second camera 2, an axis line of the first lens mounting portion 31 is parallel to an axis line of the second lens mounting portion 32. Thus, when the first camera 1 is mounted in the first lens mounting portion 31 and the second camera 2 is mounted in the second lens mounting portion 32, orientations of the first camera 1 and the second camera 2 may be uniform so as to facilitate use of the dual-camera module.

Further, continuing reference to FIG. 2, an inner wall of the first lens mounting portion 31 is provided with a first screw thread 311A, and an outer surface of a lateral side of an end of the first camera is provided with a second screw thread 311B, and the first camera 1 is fixedly mounted on the first lens mounting portion 31 by engagement of the second screw thread 311B with the first screw thread 311A. Thus, the first camera 1 is mounted on the first lens mounting portion 31 by means of screw thread engagement, which increases mounting firmness of the first camera. In addition, the first camera 1 is directly mounted on the first lens mounting portion 31 on the installation bracket 3, as compared with the related dual-camera module, it is no longer necessary to firstly mount the first camera on a base, and then fix the base on the installation bracket, which saves a base structure for mounting the first camera, reduces the number of parts included in the dual-camera module, and simplifies installation and fastness processes of the first camera. Thus, due to the reduction of the number of parts and installation processes in the dual-camera module and a higher structural strength of the installation bracket, an overall structural strength of the dual-camera module is increased.

Specifically, an inner wall of the second lens mounting portion 32 is provided with a third screw thread 321A, and an outer surface of a lateral side of an end of the second camera 2 is provide with a fourth screw thread 321B, and the second camera 2 is fixedly mounted on the second lens mounting portion 32 by engagement of the third screw thread 321A with the fourth screw thread 321B. Thus, the second camera 2 is mounted on the second lens mounting portion 32 by means of screw-thread engagement, which increases mounting firmness of the second camera. In addition, the second camera 2 is directly mounted on the second lens mounting portion 32 on the installation bracket 3, as compared with the related dual-camera module, it is no longer necessary to firstly mount the second camera on a base and then fix the base on the installation bracket, which saves a base structure for mounting the second camera, reduces parts included in the dual-camera module, and simplifies installation and firmness processes of the second camera. Thus, due to reduction of the number of parts and installation processes in the dual-camera module and higher structural strength of the installation bracket, an overall structural strength of the dual-camera module is increased.

Further, continuing reference to FIG. 2, the dual-camera module further includes a first optical filter 4 and a first protrusion 312. The first protrusion 312 is protruded outwards at a position on the inner wall of the first lens mounting portion 31, and the first optical filter 4 is fixed on the first protrusion 312 and is arranged opposite to the first camera 1.

Thus, the first optical filter 4 arranged opposite to the first camera 1 is provided in the first lens mounting portion 31, so that visible light portion entering the first lens mounting portion 31 through the first camera 1 may be adjusted. Specifically, the first protrusion 312 may be arranged at a position below the first screw thread 311A on the inner wall of the first lens mounting portion 31, so that the first optical filter 4 fixed on the first protrusion 312 may be ensured to be below the first camera 1. In addition, the first protrusion 312 may be an annular protrusion, that is, a first annular protrusion may be provided at a position on the inner wall of the first lens mounting portion 31 so as to improve installation firmness of the first optical filter 4. Of course, in order to further increase the installation firmness of the first optical filter 4, the first optical filter 4 may be fixed on the first protrusion 312 by a silica gel.

In addition, in particular, the first protrusion 312 may be outwardly protruded at a position below the first screw thread 311A on the inner wall of the first lens mounting portion 31 and above a bottom of the first lens mounting portion 31, and the first optical filter 4 is fixed on the first protrusion 312, and a first circuit board 6 is fixed at the bottom of the first lens mounting portion 31, so that the first optical filter 4, a lower portion of the first lens mounting portion 31 (i.e., a portion of the first lens mounting portion 31 below the first protrusion 312), and the first circuit board 6 form a sealed cavity, and then a first image sensor 7 is fixed at a position opposite to the first optical filter 4 on the first circuit board 6, so that light may be projected onto the first image sensor 7 through the first camera 1 and the first optical filter 4.

In addition, further, continuing reference to FIG. 2, the dual-camera module further includes a second optical filter 5 and a second protrusion 322. The second protrusion 322 is protruded outwardly at a position on the inner wall of the second lens mounting portion 32, and the second optical filter 5 is fixed on the second protrusion 322 and is arranged opposite to the second camera 2.

Thus, the second optical filter 5 arranged opposite to the second camera 2 is provided in the second lens mounting portion 32, so that visible light portion entering the second lens mounting portion 32 through the second camera 2 may be adjusted. Specifically, the second protrusion 322 may be arranged at a position on the inner wall of the second lens mounting portion 32 below the third screw thread 321, so that the second optical filter 5 fixed on the second protrusion 322 may be ensured to be below the second camera 2. In addition, specifically, the second protrusion 322 may be an annular protrusion, that is, a second annular protrusion may be provided at a position on the inner wall of the second lens mounting portion 32, so that installation firmness of the second optical filter 5 may be increased. Of course, in order to further increase the installation firmness of the second optical filter 5, the second optical filter 5 may be fixed on the second protrusion 322 by a silica gel.

In addition, specifically, the second protrusion 322 may be outwardly protruded at a position on the inner wall of the second lens mounting portion 32 below the third screw thread 321A and above a bottom of the second lens mounting portion 32, and the second optical filter 5 is fixed on the second protrusion 322, and a second circuit board is fixed at the bottom of the second lens mounting portion 32, so that the second optical filter 5, a lower portion of the second lens mounting portion 32 (i.e., a portion of the second lens mounting portion 32 below the second protrusion 322), and the second circuit board form a sealed cavity, and then a second image sensor 8 is fixed at a position opposite to the second optical filter 5 on the second circuit board so that light rays may be projected onto the second image sensor 8 through the second camera 2 and the second optical filter 5. Specifically, the second circuit board and the first circuit board 6 may be the same circuit board.

In this way, in the dual-camera module in the embodiments of the present disclosure, the first camera is directly fixedly mounted on the first lens mounting portion provided with the first optical filter, and the second camera is directly fixedly mounted on the second lens mounting portion provided with the second optical filter, and the first lens mounting portion and the second lens mounting portion are connected such that the first camera, the second camera, the first optical filter, and the second optical filter are integrated on the installation bracket; as compared with the related dual-camera module, it is no longer necessary to firstly mount the first camera and the second camera on bases, and then fix the bases on the installation bracket provided with the optical filter, thereby reducing the number of production and installation processes of the parts of a camera module, and improving production efficiency and yield; in addition, since the first lens mounting portion and the second lens mounting portion of the installation bracket are connected, a structural strength of the installation bracket is increased, and due to reduction of the number of parts and installation processes of the dual-camera module, the structural strength of the dual-camera module is increased and a space occupied by the dual-camera module is reduced, thereby solving the problem that the related dual-camera module has the poor strength and occupies the large space due to separation between bases corresponding the dual cameras.

The embodiments of the present disclosure further provide a mobile terminal. The mobile terminal includes the dual-camera module provided by the present disclosure. Specifically, the mobile terminal includes at least one of a mobile phone, a tablet computer, an e-book reader, an MP3 player, an MP4 player, a digital camera, a laptop portable computer, an on-board computer, a desktop computer, a set top box, a smart TV, and a wearable device.

The mobile terminal in the embodiments may implement various processes implemented by the dual-camera module in the foregoing embodiments. To avoid repetition, details are not described herein again.

The various embodiments in the specification are described in a progressive manner, and description each embodiment focuses on differences from other embodiments, and the same or similar parts between the various embodiments may be obtained by referring to each other.

The above are optional embodiments of the present disclosure. It should be noted that those skilled in the art may also make several improvements and refinements without departing from the principles of the present disclosure. Such improvements and refinements are also in the protection scope of the present disclosure.

## Claims

1. A dual-camera module, comprising:
a first camera;
a second camera; and
an installation bracket comprising a first lens mounting portion and a second lens mounting portion connected to the first lens mounting portion,
wherein, the first camera is fixedly mounted on the first lens mounting portion, the second camera is fixedly mounted on the second lens mounting portion.

2. The dual-camera module according to claim 1, wherein both the first lens mounting portion and the second lens mounting portion are hollow structures, and an outer sidewall of the first lens mounting portion and an outer sidewall of the second lens mounting portion are integrally formed.

3. The dual-camera module according to claim 2, wherein an axis line of the first lens mounting portion is parallel to an axis line of the second lens mounting portion.

4. The dual-camera module according to claim 2 or 3, wherein a first screw thread is provided on an inner wall of the first lens mounting portion, a second screw thread is provided on an outer surface of a lateral side of an end of the first camera, the first camera is fixedly mounted on the first lens mounting portion by engagement of the second screw thread with the first screw thread.

5. The dual-camera module according to any one of claims 2 to 4, further comprising:
a first optical filter,
wherein, a first protrusion is protruded outwardly at a position on an inner wall of the first lens mounting portion, the first optical filter is fixed on the first protrusion and is disposed opposite to the first camera.

6. The dual-camera module according to claim 5, wherein the first optical filter is fixed to the first protrusion by a silica gel.

7. The dual-camera module according to any one of claims 2 to 5, wherein a third screw thread is provided on an inner wall of the second lens mounting portion, a fourth screw thread is provided on outer surface of a lateral side of an end of the second camera, the second camera is fixedly mounted on the second lens mounting portion by engagement of the fourth screw thread with the third screw thread.

8. The dual-camera module according to any one of claims 2 to 7, further comprising:
a second optical filter,
wherein a second protrusion is protruded outwardly at a position on an inner wall of the second lens mounting portion, the second optical filter is fixed on the second protrusion and is disposed opposite to the second camera.

9. A mobile terminal, comprising:
a dual-camera module according to any one of claims 1 to 8.

10. The mobile terminal according to claim 9, wherein the mobile terminal comprises:
at least one of a mobile phone, a tablet computer, an e-book reader, an MP3 player, an MP4 player, a digital camera, a laptop portable computer, an on-board computer, a desktop computer, a set top box, a smart television, and a wearable device.
